Europäisches Patentamt

European Patent Office

Office européen des brevets

(11) Numéro de publication : **0 198 744**
**B1**

(12) **FASCICULE DE BREVET EUROPÉEN**

(45) Date de publication du fascicule du brevet :
**15.03.89**

(21) Numéro de dépôt : **86400615.0**

(22) Date de dépôt : **24.03.86**

(51) Int. Cl.⁴ : **B 29 C 67/14**, B 29 C 53/66,
B 29 C 53/72 // B29K105:10,
B29L22:00

(54) Procédé et dispositif pour réaliser une pièce creuse de forme complexe par enroulement filamentaire au contact.

(30) Priorité : **25.03.85 FR 8504379**

(43) Date de publication de la demande :
**22.10.86 Bulletin 86/43**

(45) Mention de la délivrance du brevet :
**15.03.89 Bulletin 89/11**

(84) Etats contractants désignés :
**AT BE CH DE GB IT LI NL SE**

(56) Documents cités :
**WO--A--84 /003 51
DE--A-- 3 226 290
US--A-- 4 461 669**

(73) Titulaire : **AEROSPATIALE SOCIETE NATIONALE
INDUSTRIELLE
37, Boulevard de Montmorency
F-75781 Paris Cedex 16 (FR)**

(72) Inventeur : **Tisne, Jean-Louis
4 allée Saint-Julien
F-33127 Martignas (FR)**
Inventeur : **Cabanel, Daniel
2 Impasse Edith Piaf
F-33700 Merignac (FR)**

(74) Mandataire : **Lepeudry-Gautherat, Thérèse et al
ARMENGAUD JEUNE CABINET LEPEUDRY 6, rue du
Faubourg Saint Honoré
F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé et un dispositif pour réaliser une pièce creuse de forme quelconque par enroulement d'un produit composite à base de fibres (verre, carbone, kevlar etc...) continues imprégnées d'une résine.

Actuellement la technique de l'enroulement filamentaire consiste à faire décrire à une tête de distribution des fibres, qui se présentent sous forme d'un ruban pouvant atteindre environ deux dixièmes de millimètre d'épaisseur et avoir une largeur pouvant aller jusqu'à 20 millimètres environ, une trajectoire programmée, éloignée d'un mandrin de manière que les fibres soient posées sous tension à l'endroit voulu sur le mandrin. Le ruban est alors entraîné sous l'action simultanée de la tête de distribution et du mandrin qui provoque le dévidement de la fibre depuis des bobines de stockage. L'effort de tension est créé par le freinage des bobines et le frottement des fibres sur les divers éléments mécaniques qui la supportent et qui la guident.

Une telle technique possède une limite dans le fait que la fibre étant posée tendue, une partie concave située sur le mandrin ne peut pas être couverte. Une autre conséquence de cette pose sous tension réside dans le fait que les trajectoires de pose des fibres ne peuvent être que géodésiques ou proches de celles-ci.

Même dans le cas de formes de révolution relativement simple, ne présentant que des variations de diamètres, cette technique d'enroulement comporte des inconvénients notamment si les fibres sont imprégnées de résine thermoplastique rigide ou en poudre. En effet pour les appliquer il convient de les souder en continu et d'appliquer une pression de contact. Or la pression de contact étant uniquement fonction de la tension de la fibre il est très difficile d'en maîtriser la valeur lorsque l'on change de rayon de courbure.

D'après le WO-A-8 400 351, on connaît un dispositif de dépose d'une couche de produit composite sur une pièce, à l'aide d'un galet applicateur qui exerce un effort d'application sur un mandrin suivant une direction fixe radiale, sans garantir que la force d'application exercée par le bras qui supporte le galet soit constante.

Dans cette technique connue, les mouvements de la tête ne peuvent être déduits de la trajectoire, sur des formes complexes, que soit par des calculs lourds nécessitant l'intervention de l'homme de métier, soit par apprentissage c'est-à-dire enregistrement d'opération modèle.

La présente invention a pour objet de remédier aux inconvénients de la technique de l'enroulement filamentaire et par là de permettre la réalisation de pièces creuses de formes complexes, soit par pose de fibres sur l'extérieur du mandrin comportant des formes extérieures concaves, soit par pose de fibres à l'intérieur d'un moule comportant des formes intérieures convexes. Elle présente également l'avantage de pouvoir utiliser toutes sortes de fibres continues imprégnées d'une résine souple ou rigide selon des trajectoires très éloignées des trajectoires géodésiques imposées par la technique antérieure.

A cet effet l'invention a pour premier objet un procédé de réalisation d'une pièce creuse de forme quelconque par enroulement d'un produit composite à base de fibres continues imprégnées d'une résine, selon lequel on dépose au moins une couche dudit produit composite, se présentant sous la forme d'un ruban, sur une surface portée par une pièce de forme, au moyen d'un organe applicateur fixé à l'extrémité d'un élément télescopique comportant une génératrice de contact entre laquelle et ladite surface passe ledit produit, ladite surface étant animée par rapport audit organe applicateur d'un mouvement relatif de rotation autour d'un axe fixe et de translation parallèle à cet axe dont la combinaison définit la trajectoire du ruban sur la pièce, trajectoire qui peut comporter une suite d'inflexions constituant ainsi un parcours comprenant successivement et relativement des cheminements convexes puis concaves, le produit étant apporté sans tension entre la génératrice et ladite surface, la génératrice étant sensiblement perpendiculaire à la tangente à la trajectoire du ruban au point de contact. Selon l'invention, on maintient ledit organe applicateur en contact sous une force d'application sensiblement constante et on maintient ledit élément télescopique suivant une direction constamment sensiblement normale à ladite surface au point de contact.

Un second objet de l'invention réside dans un dispositif pour mettre en œuvre le procédé susdit dans lequel l'organe applicateur est constitué par une portion de cylindre disposée transversalement à l'extrémité d'une tête longitudinale reliée à un mécanisme de support orientable commandé par un dispositif programmé, caractérisé par le fait que le mécanisme de support orientable est commandé par le dispositif programmé de façon que l'axe de la tête longitudinale soit orienté perpendiculairement à la tangente à la trajectoire du ruban au point de contact, le dispositif programmé permettant la détermination des composantes de ladite normale et de ladite tangente dans un repère ou système de référence lié à l'axe susdit de rotation relative de la pièce.

Avantageusement la tête longitudinale d'application est attelée de manière démontable audit mécanisme de support.

Cette tête d'application comporte un premier élément d'attelage au mécanisme de support susdit et un second élément porteur dudit organe applicateur est monté à coulissement par rapport au premier élément à l'encontre d'une force tendant à les éloigner l'un de l'autre.

Dans le cas des résines thermoplastiques ou thermodurcissables un moyen de stabilisation est constitué par un dispositif d'apport d'énergie par une cavité microonde située à proximité du cylindre applicateur.

Dans un cas particulier pour des résines thermoplastiques l'organe applicateur et le moyen de stabilisation susdits sont constitués par une électrode ultrasonique présentant une génératrice en regard de ladite surface et sur laquelle passe ledit ruban.

Par ailleurs le mécanisme de support orientable de la tête susdite est constitué par un bras articulé dont une extrémité porte ladite tête au moyen d'un organe pour son entraînement autour de son axe longitudinal, l'autre extrémité étant attelée à un chariot susceptible d'être animé d'un mouvement dans deux directions orthogonales dont l'une est parallèle à l'axe fixe de rotation relative de la pièce de forme par rapport à l'organe applicateur.

Dans une variante de réalisation, le bras articulé susdit comporte au moins deux tronçons articulés entre eux autour d'un axe orthogonal à l'axe longitudinal de rotation de ladite tête et un dispositif de réglage de la position angulaire desdits tronçons autour de cet axe.

Dans une autre variante le bras articulé susdit est attelé audit chariot par l'intermédiaire d'un levier dont une extrémité est articulée au chariot autour d'un axe parallèle à l'axe susdit de rotation relative, son autre extrémité étant articulée audit bras autour d'un axe parallèle au précédent, tandis que sont prévus des dispositifs de réglage de la position angulaire du levier par rapport au chariot autour du premier axe susdit et du levier par rapport au bras autour du second axe susdit.

Il sera avantageux de prévoir un magasin de bobines de fibres attelées à l'élément de bras articulé situé le plus proche de la tête d'application.

Enfin les organes d'entraînement du chariot, de réglage de l'orientation de la tête par rapport au bras, de réglage des orientations des divers tronçons de bras entre eux et relativement au chariot autour des axes susdits, sont constitués par des moteurs commandés par le dispositif programmé susdit.

L'invention sera mieux comprise au cours de la description donnée ci-après à titre d'exemple purement indicatif et non limitatif qui permettra d'en dégager les avantages et les caractéristiques secondaires.

Il sera fait référence aux dessins annexés dans lesquels :

— la figure 1 est une vue générale d'une machine pour mettre en œuvre le procédé selon l'invention sur un mandrin ;

— la figure 2 illustre par un schéma la mise en œuvre du procédé selon l'invention dans un moule ;

— la figure 3 est un schéma en coupe de la tête d'application selon l'invention ;

— la figure 4 est le schéma d'un détail de la tête d'application selon la figure 3 ;

— la figure 5 est un schéma d'une variante de réalisation de la tête d'application ;

— la figure 6 est un schéma d'une autre variante de réalisation de ladite tête ;

— la figure 7 illustre le mécanisme de support orientable de la tête d'application ;

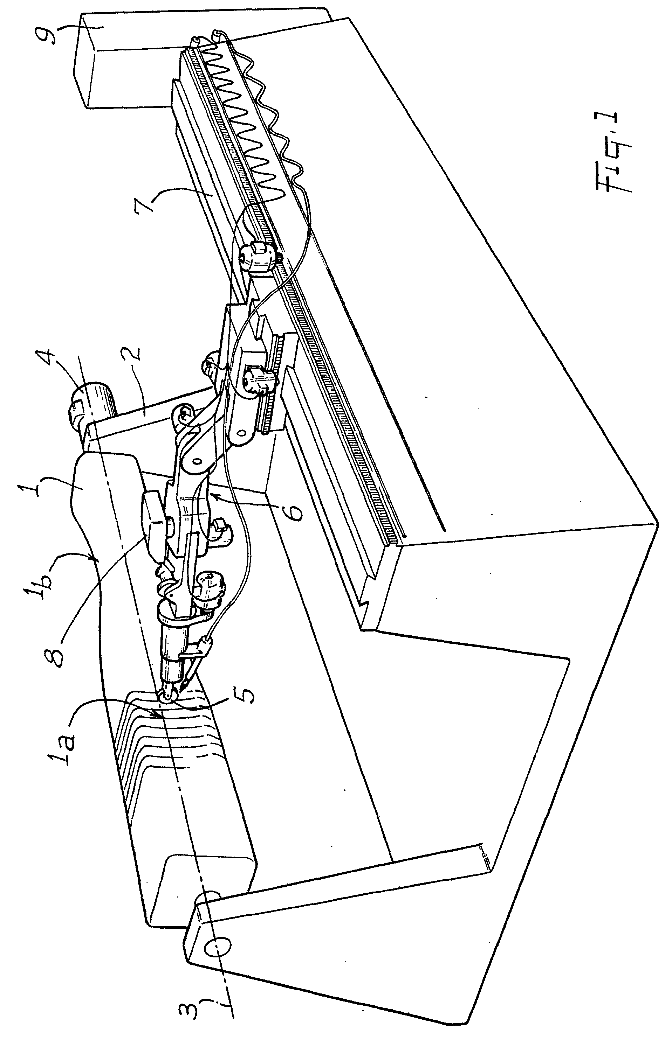

On expliquera le procédé de l'invention en regard des figures 1 et 2. Sur la figure 1 on a représenté en 1 une pièce de forme du type mandrin dont la surface extérieure est de forme complexe parce que présentant notamment des parties concaves 1a et en diabolo 1b. Ce mandrin est monté à rotation sur un bâti 2 autour d'un axe 3, l'entraînement en rotation étant assuré par un moteur 4.

Un organe applicateur 5 situé à l'extrémité d'un mécanisme de support 6, décrit plus en détail en regard des figures suivantes, peut être animé par rapport à la surface du mandrin 1 d'un mouvement de translation parallèle à l'axe 3, le long de glissières 7 portées par le bâti 2. Un ruban de fibres continues est formé à partir d'un magasin de bobines 8 porté par le mécanisme 6, et est conduit jusqu'à l'organe applicateur 5 au moyen duquel il est déposé sur la surface extérieure du mandrin, l'organe 5 étant constamment maintenu au contact de cette surface et décrivant celle-ci le long d'une trajectoire définie par la combinaison des mouvements de rotation du mandrin autour de l'axe 3 et de translation du mécanisme 6 le long des glissières 7.

L'organe applicateur 5 est de forme généralement cylindrique de manière à présenter une génératrice de contact sur la surface du mandrin 1. Le procédé selon l'invention consiste, d'une part à apporter sans tension le ruban de produit à enrouler entre ladite génératrice et la surface du mandrin 1 et, d'autre part à maintenir une force d'application du produit sur la surface du mandrin dans une direction constamment sensiblement normale à la surface au point de contact. Ce procédé consiste également à maintenir la génératrice de contact susdite constamment sensiblement perpendiculaire à la tangente à la trajectoire du produit dans la zone du point de contact. Le procédé de l'invention comporte enfin une phase de stabilisation du produit déposé qui consiste : pour les résines thermodurcissables à utiliser soit leur « collant » naturel ou provoqué par une prégélification, soit à créer au moins un début de polymérisation sous l'effet d'un rayonnement ou d'un apport de chaleur, soit encore une combinaison des deux possibilités et pour les résines thermoplastiques, qui peuvent se présenter sous forme rigide ou de poudre à les faire fondre par un dispositif d'apport d'énergie, déjà cité, et à les refroidir pour les souder au ruban adjacent et à la sous-couche. Ce traitement de stabilisation est réalisé au voisinage immédiat du point d'application de manière que le ruban déposé conserve la forme de la surface qu'il épouse.

La mise en œuvre du procédé de l'invention implique la connaissance constante de la position du point de contact de l'organe applicateur sur la surface, la connaissance de la normale à cette surface à chacun de ses points de contact, et la connaissance de la trajectoire du produit sur la surface. Ces divers facteurs peuvent être traduits numériquement afin d'être exploités par un moyen de commande numérique 9 du mécanisme 6 de support de l'organe applicateur 5, soit par le calcul, soit par une méthode de copiage et d'enregistrement d'une opération modèle. Le calcul s'applique notamment lorsque la forme extérieure du mandrin est issue d'une conception assistée par ordinateur.

La figure 2 illustre par un schéma le fait que le procédé de l'invention peut s'appliquer par réalisation d'un enroulement filamentaire au contact sur une surface intérieure d'un moule creux. Le moule 10 peut être fixe et l'organe applicateur symbolisé par le galet 11 attelé à une machine tournante autour de l'axe 12. Le moule peut également être tournant autour de l'axe 12 auquel cas le mécanisme de support au galet 11 est fixe. De même que dans le cas précédent ce mécanisme de support est tel qu'il permet d'orienter la force d'application le long de la normale au point de contact à la surface qui est revêtue comme illustrée par les flèches 13. Il permet également d'orienter la génératrice de contact du galet 11 de manière à satisfaire à la condition énoncée précédemment et il comporte un moyen de stabilisation du produit déposé symbolisé par les flèches 14.

Pour assurer le pilotage de l'organe applicateur conformément au procédé selon l'invention, on utilise un dispositif de support orientable qui d'une part matérialise la direction de la force d'application et d'autre part possède tous les degrés de liberté nécessaires pour placer cette direction dans toutes les orientations désirées et modifier l'orientation de la génératrice de contact au cours du bobinage.

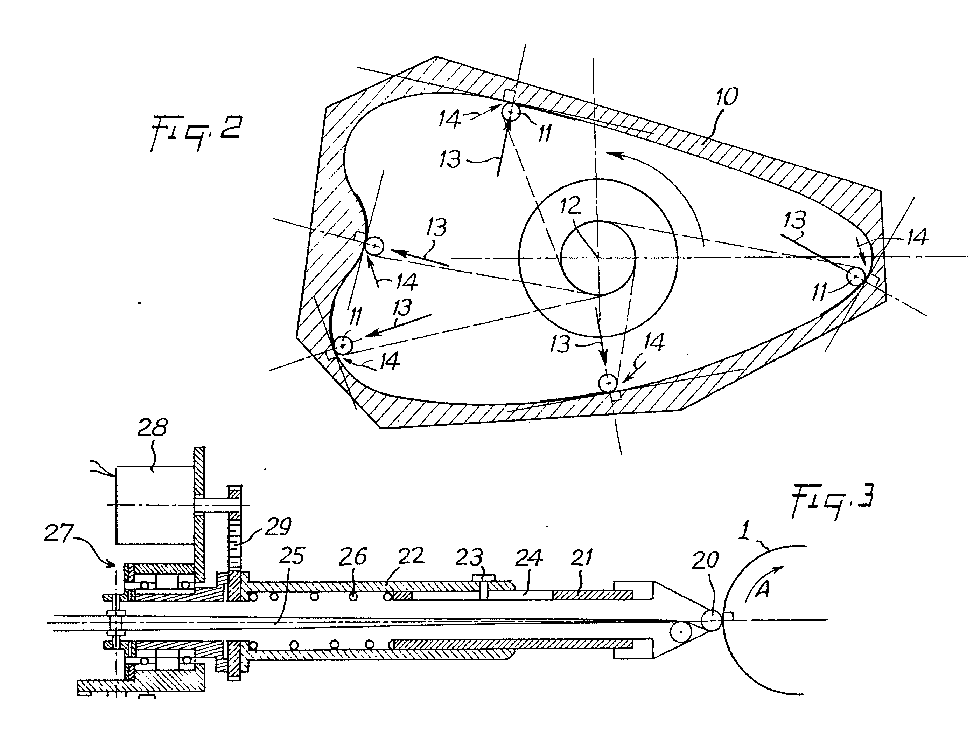

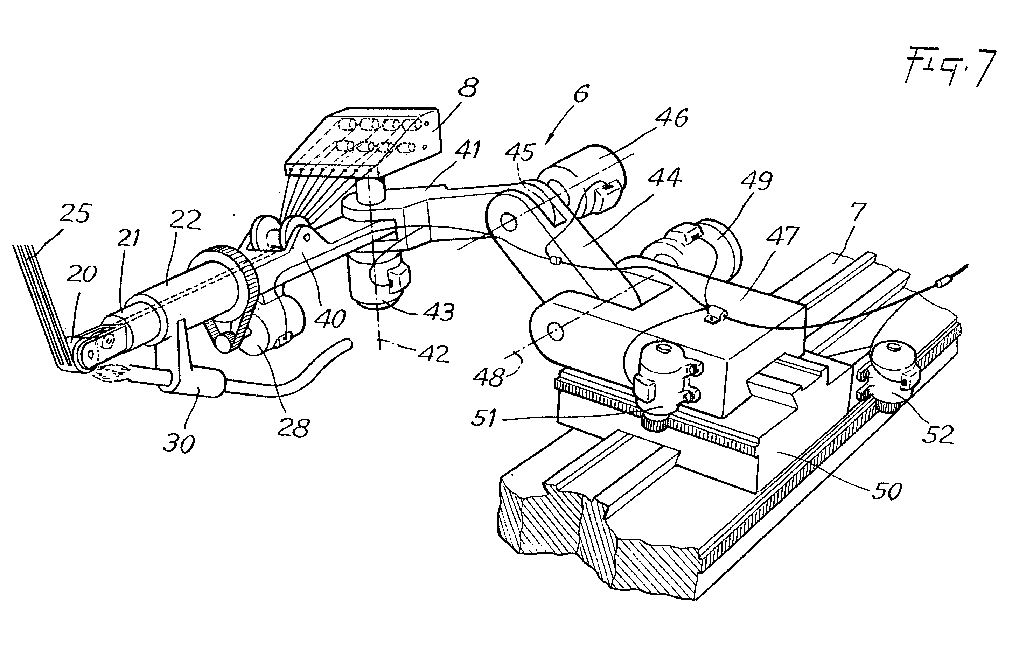

Ainsi dans une réalisation préférée ce dispositif comporte deux parties, à savoir une tête d'application le long de l'axe longitudinal de laquelle ladite force d'application est engendrée et qui porte l'organe applicateur et les moyens de stabilisation, et un mécanisme de support articulé permettant l'orientation de la tête et de la génératrice de contact. Les figures 3 à 6 illustrent schématiquement les têtes d'application. Les figures 7 et 8 illustrent deux réalisations d'un mécanisme de support équipé de la tête susdite.

En se reportant à la figure 3 on retrouve le mandrin 1 animé d'une rotation A sur lui-même. L'organe applicateur est ici constitué par un galet 20 monté à rotation libre à l'extrémité d'une pièce tubulaire 21 elle-même logée à coulissement dans un manchon tubulaire 22. Un doigt de guidage 23 monté sur le manchon 22 coopère avec une lumière 24 pour lier en rotation les pièces 21 et 22 et constituer une butée à leur mouvement relatif. Les pièces 21 et 22 forment la tête d'application à l'intérieur de laquelle circule le ruban de fibres 25. Un ressort 26 disposé entre ces deux pièces a pour effet de repousser la pièce 21 en direction du mandrin 1. Le manchon 22 est monté à rotation dans un palier 27 solidaire du mécanisme articulé qui sera décrit ultérieurement, et peut être pivoté dans ce palier au moyen d'un moteur 28 et d'une transmission 29 reliant l'arbre du moteur 28 audit manchon 22. Il sera préféré une liaison aisément démontable entre le manchon 22 et sa partie de guidage et de transmission logée dans le palier 27. On voit que ces dispositions matérialisent la direction de la force d'application susdite le long de l'axe longitudinal des éléments 21 et 22, ladite force d'application résultant de l'effet du ressort 26. Ce n'est pas sortir du cadre de l'invention que de prévoir d'autres dispositifs élastiques ou commandés pour engendrer la force d'application, tels qu'un vérin attelé entre le manchon 22 et le coulisseau 21. La commande du moteur 28 et donc de la rotation de la tête autour de son axe longitudinal permet d'assurer l'orientation de la génératrice de contact du galet 20.

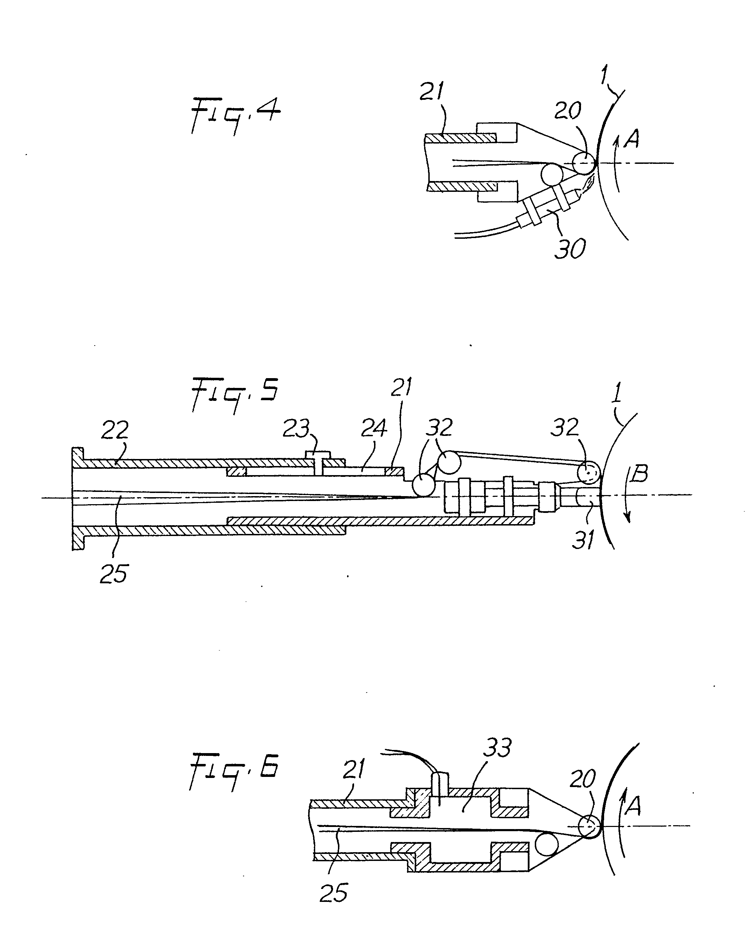

Sur la figure 4 on retrouve certains des éléments décrits en regard de la figure 3 avec les mêmes références. L'un des éléments 21 ou 22 (de préférence 21) porte un élément d'apport de chaleur 30, qui constitue un moyen de stabilisation du ruban déposé sur le mandrin 1. Ce moyen d'apport de chaleur peut être une buse d'amenée d'air chaud, un bec à l'extrémité duquel on forme une flamme ou une source de rayonnement. Ce moyen de stabilisation ainsi que ceux décrits en regard des figures 5 et 6 est utilisable pour un produit comportant des fibres continues imprégnées d'une résine rigide ou en poudre. La chaleur apportée sert alors à créer une fusion au moins partielle des résines thermoplastiques utilisées afin que le ruban se présente dépourvu de toute raideur au point de contact pour épouser intimement la surface du mandrin 1. Le durcissement ultérieur, dû au refroidissement permet de conserver la forme prise et de lier le ruban à la sous-couche.

Sur la figure 5 on retrouve certains des éléments 3 et 4 avec les mêmes références. On notera que l'organe applicateur est ici constitué par la sonotrode 31 d'un générateur ultrasonique porté par le coulisseau 21. Le ruban 26 est alors guidé à l'extérieur du générateur ultrasonique au moyen de galets de renvoi 32. La fusion du ruban est alors assurée par ultrason aux points de contact de l'électrode 31 avec le mandrin 1.

Sur la figure 6 la fusion est réalisée au moyen d'une cavité à micro-ondes 33 portée par le coulisseau 21, à l'intérieur duquel circule le ruban 26. L'organe applicateur est alors constitué par un galet 20.

On décrira maintenant en regard des figures 7 et 8, le mécanisme 6 de support et d'orientation de la tête d'application.

On rappellera que la position de l'organe applicateur par rapport à un point de contact déterminé et dans une orientation déterminée, nécessite la connaissance de six paramètres qui lui sont associés dans un repère de références données. La valeur de ces paramètres est déduite de la connaissance des paramètres de la normale susdite au point de contact, et de l'orientation de la trajectoire d'enroulement à ce point. L'extrémité de la tête d'application doit donc jouir de 6 degrés de liberté à savoir, 3 degrés de liberté en translation selon les trois axes du repère susdit et 3 degrés de liberté en rotation autour de ces trois axes (variables d'Euler).

Le mécanisme de support selon la figure 7 possède les liaisons cinématiques suffisantes pour ajuster les paramètres liés à la position de la tête d'application aux paramètres connus de la normale à la surface de la trajectoire du produit au point de contact.

En effet, le mécanisme de support 6 comporte un bras articulé dont un tronçon d'extrémité 40 porte, dans son prolongement longitudinal, la tête d'application 21, 22 pourvue de son galet 20. Par rapport à ce bras la tête 21, 22 peut tourner, grâce au palier référencé 27 sur la figure 3, autour de son axe longitudinal sur une amplitude angulaire commandée par le moteur 28. L'autre extrémité du tronçon 40 est articulée à un tronçon 41 autour d'un axe 42 perpendiculaire à l'axe de rotation de la tête 21, 22. Un moteur 43 commande l'amplitude angulaire de ce pivotement. Le tronçon 41 est lui-même articulé à un tronçon 44 autour d'un axe 45 orthogonal à l'axe 42 susdit. L'amplitude du mouvement angulaire entre les tronçons 41 et 44 est commandée par un moteur 46. Ce dernier tronçon 44 est enfin lui-même articulé sur un chariot 47 autour d'un axe 48 parallèle à l'axe 45 et également parallèle à l'axe fixe 3 de rotation relative du mandrin par rapport à l'organe applicateur. Son pivotement est assuré par la commande d'un moteur 49.

Le chariot 47 est monté à coulissement sur une table 50 le long d'une direction orthogonale à l'axe 48 et déplacé dans cette direction par un moteur 51. La table 50 quant à elle est déplaçable sur des glissières 7 solidaires du bâti (cf. figure 1) au moyen d'un moteur d'entraînement 52.

Ainsi on peut assurer un déplacement de la tête 21, 22 parallèlement à elle-même en actionnant les moteurs 46, 49, 51 et 52. On peut obtenir l'orientation de la tête parallèlement à la normale susdite en agissant en outre, et en combinaison avec une action sur les moteurs susdits, sur le moteur 43. On placera enfin la génératrice de contact du galet 20 dans l'orientation souhaitée en commandant le moteur 28.

L'amplitude de chacun des mouvements élémentaires obtenus par les moteurs susdits, résultera de la commande numérique qui leur est associée et qui assurera en continu l'adéquation des paramètres liés à la tête d'application avec ceux liés à la surface et la trajectoire au point de contact.

Dans un mode non représenté de réalisation on aura remplacé le tronçon de bras 44 par un élément du chariot 47 capable de coulisser sur ce dernier perpendiculairement au plan dans lequel il évolue. Cet élément portera alors l'axe d'articulation 45 susdit.

On notera enfin sur la figure 7 que le magasin de bobines 8 de ruban 25, est situé au plus proche de la tête d'application pour que le trajet du ruban soit le plus court possible afin de réduire les frottements et les déformations non contrôlables.

L'invention trouve une application intéressante dans le domaine des matériaux composites.

**Revendications**

1. Procédé de réalisation d'une pièce creuse de forme complexe par enroulement d'un produit composite à base de fibres continues imprégnées d'une résine selon lequel on dépose au moins une couche dudit produit composite, se présentant sous la forme d'un ruban sur une surface portée par une pièce (1, 10) de forme au moyen d'un organe applicateur (5, 11, 20) fixé à l'extrémité d'un élément télescopique (21, 22), comportant une génératrice de contact entre laquelle et ladite surface passe ledit produit, ladite surface étant animée, par rapport audit organe applicateur, d'un mouvement relatif de rotation autour d'un axe fixe (3) et de translation parallèle à cet axe dont la combinaison définit la trajectoire du ruban sur la pièce, qui peut comporter une suite d'inflexions constituant ainsi un parcours comprenant successivement et relativement des cheminements convexes puis concaves, le produit étant apporté sans tension entre la génératrice et ladite surface, la génératrice étant sensiblement perpendiculaire à la tangente à la trajectoire du ruban au point de contact, et selon lequel on stabilise le produit ainsi déposé sur la surface ou la couche précédente au voisinage immédiat du point de contact, caractérisé en ce qu'on maintient ledit organe applicateur (5, 11, 20) en contact sous une force d'application (13) sensiblement constante et en ce qu'on maintient ledit élément télescopique (21, 22) suivant une direction constamment sensiblement normale à ladite surface au point de contact.

2. Dispositif pour mettre en œuvre le procédé selon la revendication 1, comportant une tête longitudinale (21, 22) reliée à un mécanisme de support orientable (6) commandé par un dispositif programmé, tête dont l'organe applicateur (5, 11, 20, 31) est constitué par une portion de cylindre disposée transversalement à l'extrémité de ladite tête, caractérisé en ce que le mécanisme de support orientable est commandé par le dispositif programmé de façon que l'axe de la tête longitudinale (21, 22) soit orienté perpendiculairement à la tangente à la trajectoire du ruban au point de contact, le dispositif programmé permettant la détermination de la position de ladite normale et de ladite tangente dans un repère ou un système de référence lié à l'axe susdit de rotation relative de la pièce.

3. Dispositif selon la revendication 2, caractérisé en ce que la tête longitudinale (21, 22) d'application est attelée de manière démontable audit mécanisme de support (6).

4. Dispositif selon la revendication 2 ou la revendication 3, selon lequel la tête d'application comporte un premier élément d'attelage au mécanisme de support susdit et un second élément porteur dudit organe applicateur et monté à coulissement par rapport au premier élément et comportant un moyen de stabilisation du ruban constitué par un dispositif d'apport d'énergie, caractérisé en ce que le dispositif d'apport d'énergie est constitué par une cavité micro-ondes (33) située dans ledit second élément (21) immédiatement en amont de l'organe applicateur (20).

5. Dispositif selon la revendication 4, caractérisé en ce que le ruban (25) comporte des résines thermoplastiques, et que l'organe applicateur et le moyen de stabilisation susdits sont constitués par une électrode ultra-sonique (31) présentant une génératrice en regard de ladite surface et sur laquelle passe ledit ruban (25).

6. Dispositif selon l'une quelconque des revendications 2 à 5, caractérisé en ce que le mécanisme (6) de support orientable de la tête susdite est constitué par un bras articulé dont une extrémité porte ladite tête (21, 22) au moyen d'un organe (27, 28, 29) pour son entraînement autour de son axe longitudinal, l'autre extrémité étant attelée à un chariot (47, 50) susceptible d'être animé d'un mouvement dans deux directions orthogonales dont l'une (7) est parallèle à l'axe fixe (3) de rotation relative de la pièce de forme par rapport à l'organe applicateur.

7. Dispositif selon la revendication 6, caractérisé en ce que le bras articulé susdit comporte au moins deux tronçons articulés (40, 41) entre eux autour d'un axe (42) orthogonal à l'axe longitudinal de rotation de ladite tête (21, 22) et un dispositif de réglage (43) de la position angulaire desdits tronçons autour de cet axe (42).

8. Dispositif selon la revendication 5 ou la revendication 6, caractérisé en ce que le bras articulé susdit est attelé audit chariot (47, 50) par l'intermédiaire d'un levier (44) dont une extrémité est articulée au chariot (47, 50) autour d'un axe (48) parallèle à l'axe susdit de rotation relative, son autre extrémité étant articulée audit bras autour d'un axe (45) parallèle au précédent tandis que sont prévus des dispositifs de réglage (46, 49) de la position angulaire du levier (44) par rapport au chariot (47, 50) autour du premier axe (48) susdit et du levier (44) par rapport au bras (41, 40) autour du second axe susdit (45).

9. Dispositif selon l'une quelconque des revendications 5 à 8, caractérisé en ce que l'élément (40) de bras articulé adjacent à la tête d'application (21, 22) est équipé d'un magasin de bobines (8) de stockage des fibres.

10. Dispositif selon l'une quelconque des revendications 2 à 9, caractérisé en ce que les organes d'entraînement (28, 43, 46, 49, 51, 52) du chariot de réglage de l'orientation de la tête par rapport au bras, et de réglage des orientations des divers tronçons de bras entre eux et relativement au chariot autour des axes susdits, sont constitués par des moteurs commandés par le dispositif (9) programmé susdit.

## Claims

1. Method for producing a hollow body of complex shape by winding a composite product based on continuous fibres impregnated with a resin, according to which at least one layer of the said composite product, being in the form of a tape, is deposited on a surface carried by a forming body (1, 10) by means of an applicator device (5, 11, 20) fixed to the end of a telescopic member (21, 22), having a contact generatrix between which and the said surface the said product passes, the said surface being impelled in relation to the said applicator device by a relative movement of rotation about a fixed axis (3) and of translation parallel to the said axis, the combination of which defines the path of the tape on the body which may include a series of inflexions thus forming a course comprising, successively and relatively, convex paths and then concave paths, the product being applied without tension between the generatrix and the said surface, the generatrix being substantially perpendicular to the tangent to the path of the tape at the point of contact, and according to which the product thus deposited on the surface or the preceding layer is stabilised in the immediate vicinity of the point of contact, characterised in that the said applicator device (5, 11, 20) is maintained in contact under a substantially constant application force (13) and that the said telescopic member (21, 22) is maintained in a direction which is always substantially normal to the said surface at the point of contact.

2. Apparatus for implementing the method according to Claim 1, having a longitudinal head (21, 22) connected to a directable support mechanism (6) controlled by a programmed device, the head having an applicator device (5, 11, 20, 31) formed by a portion of a cylinder arranged transversely at the end of the said head, characterised in that the directable support mechanism is controlled by the programmed device so that the axis of the longitudinal head (21, 22) is directed perpendicular to the tangent to the path of the tape at the point of contact, the programmed device making it possible to determine the position of the said perpendicular and of the said tangent in a reference grid or system related to the said axis of relative rotation of the body.

3. Apparatus according to Claim 2, characterised in that the longitudinal applicator head (21, 22) is detachably coupled to the said support mechanism (6).

4. Apparatus according to Claim 2 or Claim 3, according to which the applicator head has a first element for coupling to the said support mechanism and a second element for carrying the said applicator device and mounted to slide in relation to the first element, and having a means for stabilising the tape formed by an energy applying device, characterised in that the energy applying device is formed by a microwave cavity (33) located in the said second element (21) immediately upstream of the applicator device (20).

5. Apparatus according to Claim 4, characterised in that the tape (25) includes thermoplastic resins, and that the said applicator device and stabilising means are formed by an ultrasonic electrode (31) having a generatrix opposite the said surface and over which the said tape (25) passes.

6. Apparatus according to any one of Claims 2 to 5, characterised in that the directable support mechanism (6) of the said head is formed by an articulated arm, one end of which carries the said head (21, 22) by means of a device (27, 28, 29) to drive it about its longitudinal axis, the other end being coupled to a carriage (47, 50) capable of being impelled by a movement in two orthogonal directions, one (7) of which is parallel to the fixed axis (3) of relative rotation of the forming body in relation to the applicator device.

7. Apparatus according to Claim 6, characterised in that the said articulated arm has at least two sections (40, 41) hinged to one another about an axis (42) orthogonal to the longitudinal axis of rotation of the said head (21, 22) and a device (43) for regulating the angular position of the said sections about the said axis (42).

8. Apparatus according to Claim 5 or Claim 6, characterised in that the above articulated arm is coupled to the said carriage (47, 50) by means of a lever (44), one end of which is hinged to the carriage (47, 50) about an axis (48) parallel to the said axis of relative rotation, its other end being hinged to the said arm about an axis (45) parallel to the preceding one, while devices (46, 49) are provided for regulating the angular position of the lever (44) in relation to the carriage (47, 50) about the said first axis (48) and of the lever (44) in relation to the arm (41, 40) about the said second axis (45).

9. Apparatus according to any one of Claims 5 to 8, characterised in that the articulated arm element (40) adjacent to the applicator head (21, 22) is equipped with a fibre supply reel magazine (8).

10. Apparatus according to any one of Claims 2 to 9, characterised in that the drive means (28, 43, 46, 49, 51, 52) of the carriage for regulating the orientation of the head in relation to the arm, and for regulating the orientation of the various sections of arm with respect to each other and relative to the carriage, about the said axes, are formed by motors controlled by the said programmed device (9).

**Patentansprüche**

1. Verfahren zum Herstellen eines komplexgeformten Hohlkörpers durch Aufrollen eines zusammengesetzten Produktes auf Basis endloser Fasern, die mit einem Harz imprägniert sind, wobei man wenigstens eine Schicht des genannten zusammengesetzten Produktes, das sich in Form eines Bandes darbietet, auf eine Oberfläche ablegt, die von einem Formstück (1, 10) getragen wird, mittels eines Aufbringorgans (5, 11, 20), das am Ende eines Teleskopelements (21, 22) befestigt ist, eine Berührungsmantellinie enthält, zwischen der und der genannten Oberfläche das genannte Produkt durchläuft, wobei die genannte Oberfläche gegenüber dem Aufbringorgan mit einer Relativdrehbewegung um eine feste Achse (3) und eine parallel zu dieser Achse verlaufende Längsbewegung angetrieben ist, deren Kombination die Bahn des Bandes auf dem Teil bestimmt, die eine Folge von Biegungen aufweisen kann, die so einen Lauf bilden, der aufeinanderfolgend und relativ sowohl konvexe Abschnitte und dann konkave Abschnitte aufweist, wobei das Produkt ohne Spannung zwischen der Mantellinie und der genannten Oberfläche zugeführt wird, die Mantellinie im wesentlichen senkrecht zur Tangente an die Bahn des Bandes im Berührungspunkt verläuft und bei dem man das so auf der Oberfläche oder der vorangehenden Schicht abgelegte Produkt in unmittelbarer nachbarschaft zum Berührungspunkt verfestigt, dadurch gekennzeichnet, daß man das genannte Aufbringorgan (5, 11, 20) unter einer im wesentlichen konstanten Aufbringkraft (13) in Anlage hält und daß man das genannte Teleskopelement (21, 22) in einer Richtung hält, die ständig im wesentlichen senkrecht zu der genannten Oberfläche im Berührungspunkt verläuft.

2. Vorrichtung zur Durchführung des Verfahrens nach Anspruch 1, enthaltend einen länglichen Kopf (21, 22), der an einem ausrichtbaren Tragmechanismus (6) angebracht ist, der von einer programmierten Vorrichtung gesteuert ist, wobei das Aufbringorgan (5, 11, 20, 31) des Kopfes von einem Zylinderabschnitt gebildet wird, der quer am Ende des genannten Kopfes angeordnet ist, dadurch gekennzeichnet, daß der ausrichtbare Tragmechanismus durch die programmierte Vorrichtung derart gesteuert ist, daß die Achse des länglichen Kopfes (21, 22) senkrecht zur Tangente an die Bahn des Bandes im Berührungspunkt ausgerichtet ist, wobei die programmierte Vorrichtung die Bestimmung der Position der genannten Senkrechten und der genannten Tangenten in einem Bezugskoordinatensystem erlaubt, das mit der genannten Relativdrehachse des Teils verbunden ist.

3. Vorrichtung nach Anspruch 2, dadurch gekennzeichnet, daß der längliche Aufbringkopf (21, 22) demontierbar an dem Tragmechanismus (6) befestigt ist.

4. Vorrichtung nach Anspruch 2 oder 3, bei der der Aufbringkopf ein erstes Element zur Befestigung an dem genannten Tragmechanismus und ein zweites Element zum Abstützen des Aufbringorgans aufweist, das verschiebbar gegenüber dem ersten Element gelagert ist und eine Verfestigungseinrichtung für das Band trägt, die von einer Energiezuführungseinrichtung gebildet ist, dadurch gekennzeichnet, daß die Energiezuführungseinrichtung von einem Mikrowellenhohlraum (33) gebildet ist, der in dem genannten zweiten Element (21) unmittelbar vor dem Aufbringorgan (20) angeordnet ist.

5. Vorrichtung nach Anspruch 4, dadurch gekennzeichnet, daß das Band (25) thermoplastische Harze enthält und daß das Aufbringorgan und die Verfestigungseinrichtung von einer Ultraschallelektrode (31) gebildet sind, die eine Mantellinie gegenüber der genannten Oberfläche aufweist und über die das genannte Band (25) läuft.

6. Vorrichtung nach einem der Ansprüche 2 bis 5, dadurch gekennzeichnet, daß der ausrichtbare Tragmechanismus (6) für den genannten Kopf von einem Gelenkarm gebildet ist, von dem ein Ende den genannten Kopf (21, 22) mittels eines Organs (27, 28, 29) für seinen Antrieb um seine Längsachse trägt und das andere Ende an einem Schlitten (47, 50) befestigt ist, der in der Lage ist, in zwei orthogonalen Richtungen in Bewegung versetzt zu werden, von denen die eine (7) parallel zu der festen Achse (3) der Relativdrehung des Formteils gegenüber dem Aufbringorgan ist.

7. Vorrichtung nach Anspruch 6, dadurch gekennzeichnet, daß der genannte Gelenkarm wenigstens zwei gelenkig miteinander um eine Achse (42) verbundene Abschnitte (40, 41) aufweist, die orthogonal zur Längsachse der Drehung des genannten Kopfes (21, 22) verläuft, und eine Stelleinrichtung (43) für die Winkelposition der genannten Abschnitte um diese Achse (42) aufweist.

8. Vorrichtung nach Anspruch 5 oder Anspruch 6, dadurch gekennzeichnet, daß der genannte Gelenkarm an dem genannten Schlitten (47, 50) mittels eines Hebels (44) befestigt ist, von dem ein Ende an dem Schlitten (47, 50) um eine zur Achse der genannten Relativdrehung parallele Achse (45) gelenkig angebracht ist, während Stelleinrichtungen (46, 49) für die Winkelposition des Hebels (44) gegenüber dem Schlitten (47, 50) um die erste genannte Achse (48) und des Hebels (44) gegenüber dem Arm (41, 40) um die genannte zweite Achse (45) vorgesehen sind.

9. Vorrichtung nach einem der Ansprüche 5 bis 8, dadurch gekennzeichnet, daß das Element (40) des Arms, das benachbart dem Aufbringkopf (21, 22) angelenkt ist, mit einem Faservorratsspulenmagazin (8) versehen ist.

10. Vorrichtung nach einem der Ansprüche 2 bis 9, dadurch gekennzeichnet, daß die Antriebsorgane (28, 43, 46, 49, 51, 52) des Schlittens für die Einstellung der Ausrichtung des Kopfes gegenüber dem Arm und für die Einstellung der Ausrichtungen der verschiedenen Abschnitte des Arms untereinander und relativ zum Schlitten um die genannten Achsen von Motoren gebildet sind, die durch die genannte programmierte Vorrichtung (9) gesteuert sind.

Fig.1

Fig. 2

Fig. 3

Fig.4

Fig.5

Fig.6

FIG.7

EP 0 198 744 B1